# EUROPEAN PATENT APPLICATION

(11) **EP 3 978 177 A1**
(43) Date of publication of application: **06.04.2022**
(21) Application number: 20840728.8
(22) Date of filing: 29.06.2020
(51) Int. Cl.: B23K 9/23, B23K 9/02, B23K 10/02, B23K 26/323

(54) **METHOD FOR MANUFACTURING HETEROMETALLIC COMPLEX AND HETEROMETALLIC COMPLEX**

(30) Priority: 18.07.2019 JP 2019133128
(71) Applicant: Kabushiki Kaisha Kobe Seiko Sho (Kobe Steel, Ltd.), Kobe-shi, Hyogo 651-8585 (JP)
(72) Inventor: SUZUKI, Reiichi, Kanagawa 251-8551 (JP); MAEDA, Kyohei, Kanagawa 251-8551 (JP)
(74) Representative: Müller-Boré & Partner Patentanwälte PartG mbB
(86) International application number: PCT/JP2020/025509
(87) International publication number: WO 2021/010149

(57) **Abstract**

Provided are a heterometallic complex and a method for manufacturing a heterometallic complex. Said method does not require new equipment and is capable of suppressing an increase in manufacturing costs. Said method is also capable of bonding, with a high bonding strength even in the case of fillet welding, a member comprising a non-ferrous metal and a member made of steel. The method for manufacturing a heterometallic complex bonds a first member, which comprises a non-ferrous metal and has an end surface and a first surface adjacent to the end surface, with a second member made of steel. The manufacturing method comprises: a step for forming a film so as to straddle the end surface and the first surface of the first member by spraying, at a low temperature and a high speed, a metal powder that can bond with the second member onto the end surface and the first surface; a step for arranging the first member and the second member such that the film and the second member are in close proximity; and a step for carrying out fillet welding between the film and the second member.

## Description

### TECHNICAL FIELD

The present invention relates to a method for manufacturing a dissimilar metal joint product and a dissimilar metal joint product.

### BACKGROUND ART

In recent years, in the field of automobiles and the like, a high tensile strength steel (HTSS) has been applied to a body frame or the like in order to reduce the weight of a vehicle body and enhance collision safety for the purpose of reducing the amount of CO₂ emission.

In addition, for the purpose of further reducing the weight of the vehicle body, there is a high demand for a dissimilar metal joint material in which non-ferrous metal such as lightweight aluminum or aluminum alloy material and a steel material are joined together. As a method of joining dissimilar metals, generally, there is a method of joining the dissimilar metals by a nail, a screw, or the like, and a method of joining the dissimilar metals by using a self-pierce riveting (SPR) or a flow drilling screw (FDS; registered trademark).

For example, Patent Literature 1 discloses, as a method of joining a flange portion of a roof panel made of aluminum and a flange portion of a body side panel made of steel, a joint structure of dissimilar metal panels in which an adhesive layer to which an adhesive is continuously applied is formed in advance with a circular closed loop trajectory in the vicinity of an end edge of a flange portion and is joined by SPR.

However, in the method using a nail, a screw, or a rivet, since a nail and a screw are relatively expensive or a process for forming a rivet is required, there is a problem that the manufacturing cost of the joint material increases, and the obtained joint material becomes heavy by the weight of the nail, the screw, and the rivet. In addition, when the joining method described in Patent Literature 1 is adopted, it is necessary to completely replace a device or the like used for joining to provide a new facility, and the manufacturing cost significantly increases.

On the other hand, when aluminum or an aluminum alloy material and a steel material are directly welded by a general method, a brittle intermetallic compound is formed at the joining interface, and good strength cannot be obtained. For example, a method of metal inert gas (MIG) welding using a flux-cored wire containing fluoride as a welding material (filler) has also been studied, even when various measures are taken for the welding material, the joining stability is lacking, or even when the welding material is joined, the joint strength becomes extremely low.

Further, as a method of joining dissimilar metals by welding, for example, Patent Literature 2 discloses a method in which, after aluminum or an aluminum alloy is adhered to a steel base material by thermal spraying to form a thermal spray coating, the thermal spray coating and the steel base material are opposed to each other, and an aluminum alloy weld bead is formed by welding to welding the thermal spray coating and the steel base material. Further, Patent Literature 3 discloses a joining method in which aluminum or an aluminum alloy coating is formed on a surface of a first base material made of steel by a cold spray method, and the coating and a second base material made of aluminum or an aluminum alloy are opposed to each other and welded.

### CITATION LIST

### PATENT LITERATURE

Patent Literature 1: JP-A-2007-321880
Patent Literature 2: JP-A-54-28744
Patent Literature 3: JP-A-2013-188780

### SUMMARY OF INVENTION

### TECHNICAL PROBLEM

However, in the joining methods described in Patent Literature 2 and Patent Literature 3, there is a problem that a joint strength between a coating made of aluminum or an aluminum alloy and a base material made of steel is not sufficient, and as a result, a desired strength cannot be obtained even for a joint joined by welding.

In particular, in the case where dissimilar metals are welded together by fillet welding, it is difficult to secure a large joint surface, and therefore, it is required to obtain higher joint strength. Therefore, there is a demand for a joining technique capable of obtaining high strength even in the case of fillet welding in joining a steel material and a member made of non-ferrous metal.

The present invention has been made in view of the above problems, and an object of the present invention is to provide a method for manufacturing a dissimilar metal joint product and a dissimilar metal joint product capable of suppressing an increase in manufacturing cost since no new facilities is required and joining a member made of non-ferrous metal to a member made of steel with high joint strength even in the case of fillet welding.

### SOLUTION TO PROBLEM

Accordingly, the object of the present invention is achieved by the following configuration (1) according to a method for manufacturing a dissimilar metal joint product.
(1) A method for manufacturing a dissimilar metal joint product comprising joining a first member made of non-ferrous metal and having an end surface and a first surface adjacent to the end surface and a second member made of steel, the method comprising:
   spraying a metal powder capable of being joined to the second member to the end surface and the first surface of the first member at a low temperature and at a high speed to form a coating to extend over the end surface and the first surface;
   disposing the first member and the second member such that the coating and the second member are close to or contact with each other; and
   performing fillet welding between the coating and the second member.

   Further, a preferred embodiment of the present invention according to the method for manufacturing a dissimilar metal joint product relates to the following configurations (2) to (10).
(2) The method for manufacturing a dissimilar metal joint product according to (1), wherein the fillet welding melts only the coating and the second member.
(3) The method for manufacturing a dissimilar metal joint product according to (1) or (2), wherein the fillet welding is an MAG welding or an MIG welding using a welding material, a TIG welding, a plasma welding, or a laser welding.
(4) The method for manufacturing a dissimilar metal joint product according to any one of (1) to (3), wherein the fillet welding is any of a lap fillet welding, a T-shaped fillet welding, and a circumference fillet welding.
(5) The method for manufacturing a dissimilar metal joint product according to (4), wherein in the lap fillet welding, the first member in a plate shape is used as an upper plate and the second member is used as a lower member,
   the coating is formed to extend from the end surface of the upper plate to an upper surface serving as the first surface of the upper plate, and
   the coating and the lower member are welded to each other.
(6) The method for manufacturing a dissimilar metal joint product according to (4), wherein in the T-shaped fillet welding, the first member in a plate shape is used as a riser and the second member is used as a lower member, and
   the T-shaped fillet welding is a one-side fillet welding in which the coating is formed to extend over the first surface adjacent to the end surface from the end surface of the riser, the end surface facing an upper surface of the lower member, and the coating and the lower member are welded to each other from a first surface side.
(7) The method for manufacturing a dissimilar metal joint product according to (4), wherein in the T-shaped fillet welding, the first member in a plate shape is used as a riser and the second member is used as a lower member, and
   the T-shaped fillet welding is a two-side fillet welding in which the coating is formed to extend over the first surface and a second surface which are adjacent to the end surface and are opposed to each other from the end surface of the riser, the end surface facing an upper surface of the lower member, and the coating and the lower member are welded to each other from each of a first surface side and a second surface side.
(8) The method for manufacturing a dissimilar metal joint product according to (3), wherein the welding material is either a steel alloy or a nickel alloy.
(9) The method for manufacturing a dissimilar metal joint product according to any one of (1) to (8), wherein the metal powder contains at least one selected from ferritic stainless steel, austenitic stainless steel, ferritic and austenitic two-phase stainless steel, pure iron, carbon steel, nickel, a nickel alloy, cobalt, and a cobalt alloy.
(10) The method for manufacturing a dissimilar metal joint product according to any one of (1) to (9), wherein the coating has a thickness of 0.5 mm or more.
   Further, the object of the present invention is achieved by the following configuration (11) related to a dissimilar metal joint product.
(11) A dissimilar metal joint product, comprising:
   a first member made of non-ferrous metal and having an end surface and a first surface adjacent to the end surface;
   a coating that is formed on a region extending over the end surface and the first surface by spraying a metal powder capable of being joined to the second member at a low temperature and at a high speed to the end surface and the first surface of the first member;
   a second member made of steel and disposed to be close to or contact with the coating; and
   a fillet weld that is formed between the coating and the second member.

### ADVANTAGEOUS EFFECTS OF INVENTION

According to the method for manufacturing a dissimilar metal joint product of the present invention, it is possible to provide a method for manufacturing a dissimilar metal joint product in which a new facility is not required and an increase in manufacturing cost can be suppressed, and even in the case of fillet welding, a member made of non-ferrous metal and a member made of steel can be joined to each other with high joint strength. In addition, the dissimilar metal joint product of the present invention can achieve high joint strength.

### BRIEF DESCRIPTION OF DRAWINGS

Fig. 1A is a top view showing a dissimilar metal joint product according to a first embodiment of the present invention.
Fig. 1B is a cross-sectional view taken along a line L-L in Fig. 1A showing a dissimilar metal joint product according to the first embodiment of the present invention.
Fig. 2A is a top view showing a dissimilar metal joint product according to a second embodiment of the present invention.
Fig. 2B is a cross-sectional view taken along a line M-M in Fig. 2A showing a dissimilar metal joint product according to the second embodiment of the present invention.
Fig. 3A is a top view showing a dissimilar metal joint product according to a third embodiment of the present invention.
Fig. 3B is a cross sectional view taken along a line N-N in Fig. 3A showing a dissimilar metal joint product according to the third embodiment of the present invention.
Fig. 4 is a perspective view showing a dissimilar metal joint product according to a fourth embodiment of the present invention.
Fig. 5 is a perspective view showing a dissimilar metal joint product according to a fifth embodiment of the present invention.

### DESCRIPTION OF EMBODIMENTS

Hereinafter, embodiments of a dissimilar metal joint product and a method for manufacturing the same according to the present invention will be described in detail with reference to the drawings. It should be noted that the present invention is not limited to the embodiment described below, and can be optionally changed without departing from the scope of the present invention.

The present inventors have made extensive studies on a method for obtaining a dissimilar metal joint product capable of obtaining a high joint strength even in fillet welding, which can use conventional equipment, when joining dissimilar metals between a member made of non-ferrous metal and a member made of steel. As a result, the inventors have found that a dissimilar metal joint product having a high joint strength can be obtained by forming a coating on at least a part of the surface of a member made of non-ferrous metal by spraying a metal powder capable of being joined to a member made of steel at a low temperature and at a high speed, and fillet welding the coating and the member made of steel.

For example, when a metal coating is formed by spraying powder of pure iron or the like at a low temperature and at a high speed to the surface of the aluminum or aluminum alloy sheet, since a mechanical joint having a high strength is obtained between the aluminum or aluminum alloy sheet and the coating made of pure iron, it has been found that a dissimilar metal joint product having a high joint strength can be obtained by subsequent welding with a steel material.

That is, a method for manufacturing a dissimilar metal joint product according to the present invention is a method for manufacturing a dissimilar metal joint product that joins a first member made of non-ferrous metal and having an end surface and a first surface adjacent to the end surface, and a second member made of steel, the method including: spraying a metal powder capable of being joined to the second member to the end surface and the first surface of the first member at a low temperature and at a high speed to form a coating to extend over the end surface and the first surface; disposing the first member and the second member such that the coating and the second member is close to or contact with each other; and performing fillet welding between the coating and the second member.

In addition, the dissimilar metal joint product including: a first member made of non-ferrous metal and having an end surface and a first surface adjacent to the end surface; a coating formed on the end surface and the first surface of the first member in a region extend over the end surface and the first surface of the first member by spraying the metal powder capable of being joined to the second member at a low temperature and at a high speed; a second member made of steel and disposed to be close to or contact with the coating; and a fillet weld formed between the coating and the second member.

Hereinafter, a method for manufacturing a dissimilar metal joint product and a dissimilar metal joint product according to the present invention will be described in more detail with reference to specific embodiments.

### <First Embodiment: Lap Fillet Welding>

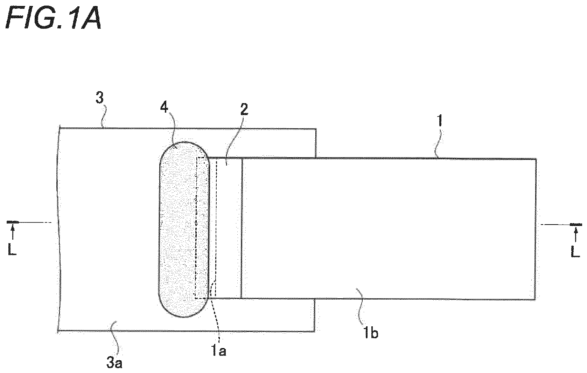

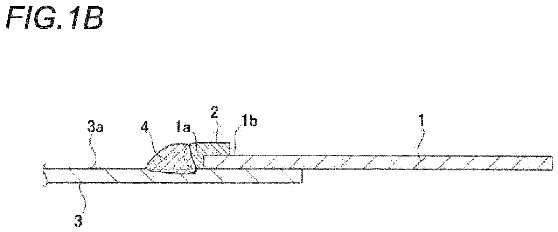

A first embodiment of the present invention will be described. The first embodiment is a case of lap fillet welding. Fig. 1A is a top view showing a dissimilar metal joint product according to a first embodiment of the present invention, and Fig. 1B is a cross-sectional view taken along the line L-L in Fig. 1A. As shown in Figs. 1A and 1B, an obtained coating 2 made of pure iron is formed by spraying a metal powder made of pure iron at a low temperature and at a high speed so as to extend over an end surface 1a of the aluminum alloy sheet (first member) 1 to a surface adjacent to the end surface 1a, that is, an upper surface (first surface) 1b.

On the steel sheet (second member) 3, an aluminum alloy sheet 1 is disposed such that an upper surface 3a thereof and the coating 2 are adjacent to each other, and a steel welding metal (fillet weld) 4 is formed at a corner portion formed by the coating 2 and the steel sheet 3.

A method for manufacturing the dissimilar metal joint product according to the first embodiment will be described in detail. First, a metal powder made of pure iron is sprayed at a low temperature and at a high speed in a continuous region between the end surface 1a of the aluminum alloy sheet (first member) 1 and the upper surface (first surface) 1b to form the coating 2. Next, the aluminum alloy sheet 1 is stacked and disposed on the steel sheet (second member) 3. At this time, the end surface 1a of the aluminum alloy sheet 1 is substantially perpendicular to the upper surface 3a of the steel sheet 3, and the coating 2 and the steel sheet 3 are disposed so as to be adjacent to each other. Thereafter, arc welding using a welding material made of steel is performed with respect to the corner portion between the coating 2 and the steel sheet 3, and the steel welding metal 4 in which the coating 2, the steel sheet 3, and the welding material are melted is formed, whereby a dissimilar metal joint product in which the steel sheet 3 and the aluminum alloy sheet 1 are joined to each other can be produced.

A cold spray method is suitable as a method for forming the coating 2 by spraying a metal powder made of pure iron at a low temperature and at a high speed. The cold spray method is a method in which the coating 2 is formed by blowing a gas and a metal powder to an object at a high speed equal to or higher than the speed of sound. In this method, since the working gas has a relatively low temperature (for example, 900°C or less, which is equal to or less than the melting point of iron particles), the metal powder having a relatively high melting point, such as pure iron, and the aluminum alloy sheet 1 do not melt each other, and the metal powder made of pure iron eats into the aluminum alloy sheet 1 due to the speed energy thereof to establish a microscopically mechanically fastening state therebetween.

Therefore, as an intermetallic compound is not formed and a brittle phase is not formed, as a result, a strong coating 2 made of pure iron is formed on a part of the aluminum alloy sheet 1. As will be described later, in the cold spray method, the gas species, the pressure, the temperature, the particle size of the metal powder, and the like to be used can be appropriately selected and carried out.

As a method of forming the coating 2 made of a material capable of being joined to the steel material on the surface of the aluminum alloy sheet 1, other than the cold spray method, other thermal spraying methods such as plasma spraying and arc spraying can be considered. However, according to those methods, the temperature of working gas is so high (for example, 2000°C or more, which is equal to or higher than the melting point of iron particles) that it exceeds the melting points of the iron particles and the aluminum alloy sheet 1 and the iron particles and the aluminum alloy sheet 1 are melted, thus, the intermetallic compound is formed by a chemical reaction and only a brittle coating can be formed. Accordingly, it is preferable to use the cold spray method. The coating 2 does not need to be formed over the entire region of the end surface 1a and the upper surface 1b of the aluminum alloy sheet 1, and may be formed on at least a part of the region of the end surface 1a and the upper surface 1b forming the steel welding metal 4.

In the dissimilar metal joint product according to the first embodiment produced as described above, since the coating 2 is formed by spraying the powder of pure iron at a high speed to the surface of the aluminum alloy sheet 1, fine irregularities are formed on the surface of the aluminum alloy sheet 1. Therefore, the coating 2 made of pure iron and the aluminum alloy sheet 1 are mechanically fastened to each other by an anchor effect, so that the coating 2 and the aluminum alloy sheet 1 are strongly coupled. In addition, since the coating 2 and the steel sheet 3 are strongly joined by general arc welding, the dissimilar metals of the steel sheet 3 and the aluminum alloy sheet 1 can be joined indirectly at a high joint strength.

That is, focusing on only the steel welding metal 4, the method for manufacturing the dissimilar metal joint product according to the first embodiment does not join dissimilar metals to each other, but joins the same kind of metals of the steel sheet 3 and the coating 2 made of pure iron.

Since the powder of pure iron is harder than the surface of the aluminum alloy sheet1, when the powder of pure iron is sprayed at a high speed to the surface of the aluminum alloy sheet 1, the shape of the powder does not collapse, and the powder maintaining a spherical shape is embedded into the aluminum alloy sheet 1. In addition, since the pure iron has a higher density than the aluminum alloy and is heavy, the kinetic energy when the powder collides with the base material is so large, as compared with the case where the coating is formed by spraying aluminum or aluminum alloy powder to the steel material, that the powder is deeply embedded into the aluminum alloy sheet 1. Therefore, a strong anchor effect can be obtained.

Further, in the first embodiment, since the arc welding using the steel welding material is performed to form the steel welding metal 4, the strength of the joint can be increased and the cost related to the welding material can be reduced as compared with the conventional welding method of forming the weld bead of the aluminum alloy.

In addition, in the first embodiment, since the coating 2 is formed so as to extend over the end surface 1a to the upper surface 1b of the aluminum alloy sheet 1, it is possible to increase the mechanical fastening force between the aluminum alloy sheet 1 and the coating 2 as compared with the case where the coating 2 is formed only on the end surface 1a, and as a result, it is possible to remarkably improve the joint strength between the aluminum alloy sheet 1 and the coating 2. Therefore, even in the case of fillet welding in which it is difficult to secure a large joint surface as in the present embodiment, high joint strength can be obtained between dissimilar metals.

### <Second Embodiment: T-shaped Fillet Welding (One Side)>

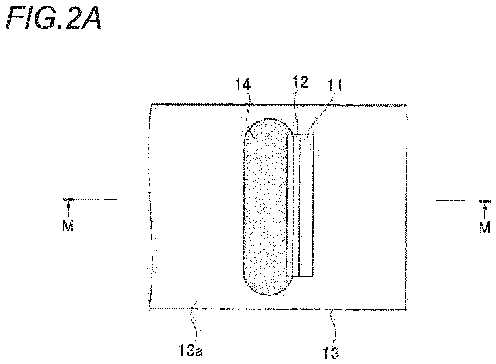

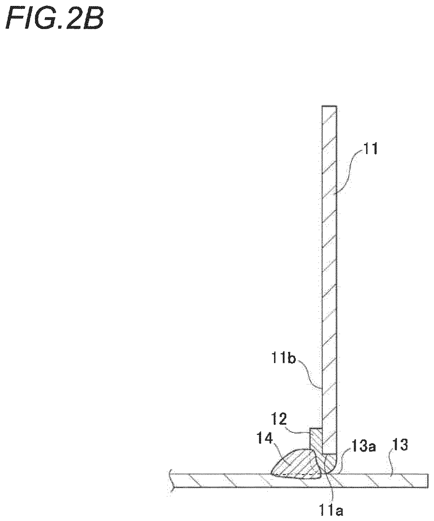

A second embodiment of the present invention will be described. The second embodiment is a T-shaped fillet welding (one side). Fig. 2A is a top view showing a dissimilar metal joint product according to a second embodiment of the present invention, and Fig. 2B is a cross-sectional view taken along the line M-M in Fig. 2A. In the second embodiment, the aluminum alloy sheet (first member) 11 is used as a riser, the steel sheet (second member) 13 is used as a lower sheet (lower member), and they are disposed so as to be in a T-shape and welded to be a joint product.

As shown in Figs. 2A and 2B, an obtained coating 12 made of pure iron is formed by spraying a metal powder made of pure iron at a low temperature and at a high speed so as to extend over the end surface 11a of the aluminum alloy sheet 11 to one surface (first surface) 11b adjacent to the end surface 11a.

In addition, the end surface 11a of the aluminum alloy sheet 11 is disposed so as to face the upper surface 13a of the steel sheet 13. That is, on the steel sheet 13, the aluminum alloy sheet 11 is disposed such that the upper surface 13a thereof and the coating 12 are close to or contact with each other, and a steel welding metal (fillet weld) 14 is formed at a corner portion formed by the coating 12 and the steel sheet 13.

A method for manufacturing the dissimilar metal joint product according to the second embodiment will be described in detail. First, a metal powder made of pure iron is sprayed at a low temperature and at a high speed in a continuous region between the end surface 11a of the aluminum alloy sheet (first member) 11 and one surface (first surface) 11b adjacent to the end surface 11a to form the coating 12. Next, the aluminum alloy sheet 11 is disposed such that the end surface 11a of the aluminum alloy sheet 11 faces the upper surface 13a of the steel sheet 13. At this time, the one surface 11b of the aluminum alloy sheet 11 is substantially perpendicular to the upper surface 13a of the steel sheet 13, and the coating 12 and the steel sheet 13 are disposed so as to be close to or contact with each other. Thereafter, arc welding using a steel welding material is performed from one surface 11b side to the corner portion between the coating 12 and the steel sheet 13, and a steel welding metal 14 in which the coating 12, the steel sheet 13, and the welding material are melted is formed, whereby a dissimilar metal joint product in which the steel sheet 13 and the aluminum alloy sheet 11 are joined to each other can be produced.

The method of forming the coating 12 by spraying the metal powder made of pure iron at a low temperature and at a high speed to the surface of the aluminum alloy sheet 11 is the same as that of the first embodiment, the metal powder made of pure iron eats into the aluminum alloy sheet 11 due to the speed energy thereof, and a strong microscopically mechanically fastening state can be obtained. Therefore, no intermetallic compound is formed, and a brittle phase cannot be formed, as a result, a strong coating 12 of pure iron is formed on a part of the aluminum alloy sheet 11.

In addition, since the coating 12 and the steel sheet 13 are strongly joined by general arc welding and the high-strength steel welding material 14 is formed, the dissimilar metals of the steel sheet 13 and the aluminum alloy sheet 11 can be joined to each other with high joint strength.

In addition, also in the second embodiment, since the coating 12 is formed so as to extend over the end surface 11a of the aluminum alloy sheet 11 to the one surface 11b, it is possible to increase the mechanical fastening force between the aluminum alloy sheet 11 and the coating 12 as compared with the case where the coating 12 is formed only on the end surface 11a or the one surface 11b, and as a result, it is possible to remarkably improve the joint strength between the aluminum alloy sheet 11 and the coating 12. Therefore, even in the case of fillet welding in which it is difficult to secure a large joint surface as in the present embodiment, high joint strength can be obtained between dissimilar metals.

As in the first embodiment, the coating 12 does not need to be formed over the entire region of the end surface 11a and the one surface 11b of the aluminum alloy sheet 11, and may be formed in at least a part of the region of the end surface 11a and the one surface 11b forming the steel welding metal 14.

### <Third Embodiment: T-shaped Fillet Welding (Double-Side)>

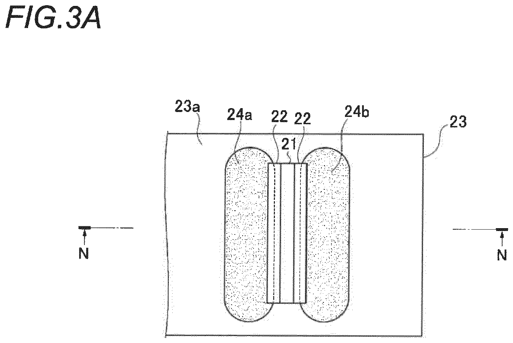

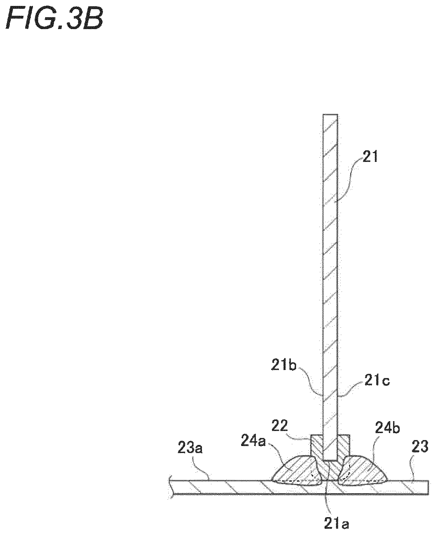

A third embodiment of the present invention will be described. The third embodiment is a case of T-shaped fillet welding (double-side). Fig. 3A is a top view showing a dissimilar metal joint product according to the third embodiment of the present invention, and Fig. 3B is a cross-sectional view taken along the line N-N in Fig. 3A. In the third embodiment, similarly to the second embodiment, the aluminum alloy sheet (first member) 21 is used as a riser, and the steel sheet (second member) 23 is used as a lower sheet (lower member), and they are welded to be a joined body in a T-shape. However, the third embodiment is an example in which the steel welding metals 24a and 24b are formed on both surface sides of the aluminum alloy sheet 21.

As shown in Figs. 3A and 3B, a coating 22 made of pure iron is obtained and formed by spraying the metal powder made of pure iron at a low temperature and at a high speed so as to extend over the end surface 21a of the aluminum alloy sheet 21 to both surfaces (that is, one surface (first surface) 21b and the other surface (second surface) 21c facing the one surface) that are adjacent to the end surface 21a and face each other.

The aluminum alloy sheet 21 is disposed such that the end surface 21a thereof faces the upper surface 23a of the steel sheet 23. That is, the aluminum alloy sheet 21 is disposed on the steel sheet 23 such that the upper surface 23a thereof and the coating 22 are close to or contact with each other. Further, a steel welding metal (fillet weld) 24a is formed at a corner portion formed by the coating 22 and the steel sheet 23 on one surface 21b side of the aluminum alloy sheet 21, and a steel welding metal (fillet weld) 24b is formed at a corner portion formed by the coating 22 and the steel sheet 23 on the other surface 21c side.

A method for manufacturing the dissimilar metal joint product according to the third embodiment will be described in detail. First, a metal powder made of pure iron is sprayed at a low temperature and at a high speed in a continuous region among the end surface 21a of the aluminum alloy sheet (first member) 21, one surface (first surface) 21b adjacent to the end surface 21a, and the other surface (second surface) 21c adjacent to the end surface 21a to form the coating 22. Next, the aluminum alloy sheet 21 is disposed such that the end surface 21a of the aluminum alloy sheet 21 faces the upper surface 23a of the steel sheet 23. At this time, the one surface 21b and the other surface 21c of the aluminum alloy sheet 21 are substantially perpendicular to the upper surface 23a of the steel sheet 23, and the coating 22 and the steel sheet 23 are disposed so as to be close to or contact with each other. Thereafter, arc welding using a steel welding material is performed from one surface 21b side with respect to the corner portion between the coating 22 and the steel sheet 23, and a steel welding metal 24a in which the coating 22, the steel sheet 23, and the steel welding material are melted is formed. Thereafter, in the same manner, arc welding using a steel welding material is performed from the other surface 21c side with respect to the corner portion between the coating 22 and the steel sheet 23 to form a steel welding metal 24b. As a result, a dissimilar metal joint product in which the steel sheet 23 and the aluminum alloy sheet 21 are joined to each other can be produced.

It should be noted that the method of forming the coating 22 by spraying the metal powder made of pure iron at a low temperature and at a high speed to the surface of the aluminum alloy sheet 21 is the same as that of the first embodiment, the metal powder made of pure iron eats into the aluminum alloy sheet 21 due to the speed energy thereof, and a strong microscopically mechanically fastening state can be obtained. Therefore, no intermetallic compound is formed, and a brittle phase cannot be formed, as a result, a strong coating 22 of pure iron is formed on a part of the aluminum alloy sheet 21.

In addition, since the coating 22 and the steel sheet 23 are strongly joined by general arc welding and the high-strength steel welding materials 24a and 24b are formed, the dissimilar metals of the steel sheet 23 and the aluminum alloy sheet 21 can be joined to each other with high joint strength.

In addition, also in the third embodiment, since the coating 22 is formed so as to extend over the end surface 21a of the aluminum alloy sheet 21 to the one surface 21b and the other surface 21c, it is possible to increase the mechanical fastening force between the aluminum alloy sheet 21 and the coating 22 as compared with the case where the coating 22 is formed on the end surface 21a, the one surface 21b, and the other surface 21c partially, and as a result, it is possible to remarkably improve the joint strength between the aluminum alloy sheet 21 and the coating 22. Therefore, even in the case of fillet welding in which it is difficult to secure a large joint surface as in the present embodiment, high joint strength can be obtained between dissimilar metals.

As in the first embodiment, the coating 22 does not need to be formed over the entire region of the end surface 21a and the one surface 21b and the other surface 21c of the aluminum alloy sheet 21, and may be formed in at least a part of the region of the end surface 21a, the one surface 21b, and the other surface 21c forming the steel welding metal 24.

### <Fourth Embodiment: Modified Example of Lap Fillet Welding>

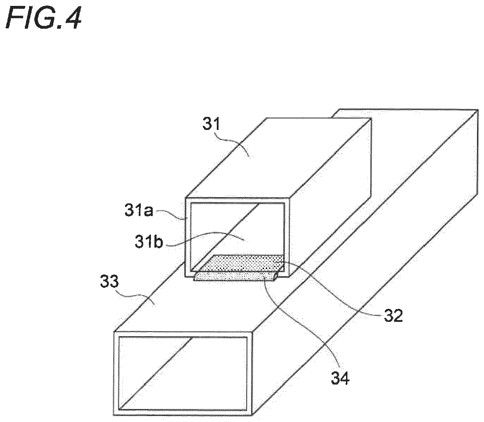

In the present invention, it is possible to use not only a plate material, but also an extruded material, a cast material, or a forged material, which is often used in the field of automobiles and the like without any problem. Fig. 4 is a perspective view showing a dissimilar metal joint product according to a fourth embodiment of the present invention. The fourth embodiment is a modified example of the lap fillet welding shown in Figs. 1A and 1B.

As shown in Fig. 4, the fourth embodiment shows a dissimilar metal joint product of a square pipe (first member) 31 made of an aluminum alloy and a square pipe (second member) 33 made of steel. That is, the coating 32 is formed so as to extend over an end surface 31a of the square pipe 31 and a first surface 31b adjacent to the end surface 31a, and the coating 32 and the square pipe 33 are fillet welded to form the steel welding metal 34, thus, the dissimilar metal joint product is obtained. The method of forming the coating 32 and the fillet welding method of the coating 32 and the square pipe 33 are the same as those of the first embodiment shown in Figs. 1A and 1B, and similar effects can be obtained.

### <Fifth Embodiment: Another Modified Example of Lap Fillet Welding>

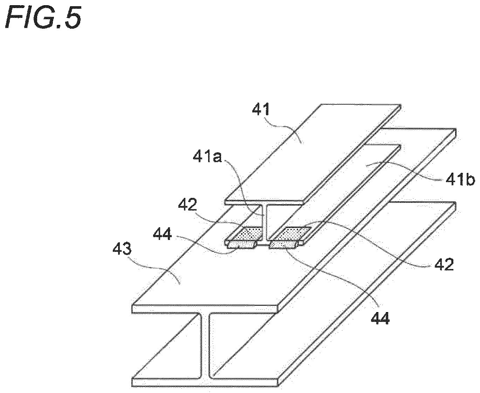

Fig. 5 is a perspective view showing a dissimilar metal joint product according to a fifth embodiment of the present invention. Similar to the fourth embodiment, the fifth embodiment is another modified example of the lap fillet welding shown in Figs. 1A and 1B.

As shown in Fig. 5, the fifth embodiment shows a dissimilar metal joint product, including two plate-shaped portions facing each other and a connecting portion that connects the centers of these two plate-shaped portions in the longitudinal direction, of an aluminum alloy H-form member (first member) 41 having an H-shaped cross section and a steel H-form member (second member) 43 having the same H-shaped cross section as that of the H-shaped member (first member) 41. That is, the coating 42 is formed so as to extend over the end surface 41a of the plate-shaped portion of the aluminum alloy H-shaped member 41 to the first surface 41b adjacent to the end surface 41a, after disposing the plate-shaped portion of the aluminum alloy H-shaped member 41 on the plate-shaped portion of the steel H-shaped member 43, the coating 42 and the plate-shaped portion of the steel H-shaped member 43 are fillet welded to form the steel welding metal 44, thus, the dissimilar metal joint product can be obtained. The method of forming the coating 42 and the fillet welding method of the coating 42 and the steel H-shaped member 43 are the same as those of the first embodiment shown in Figs. 1A and 1B, and the same effects can be obtained.

Although the first to fifth embodiments have been described in detail above, in the method for manufacturing the dissimilar metal joint product according to these embodiments, it is preferable to select an appropriate welding condition so as to melt only the coating and the steel sheet (second member) in order to further minimize the thermal influence on the aluminum alloy sheet.

### <Description of Each component>

Next, in the manufacturing methods according to the first to fifth embodiments described above, a coating, a metal powder that is a material of the coating, a first member made of non-ferrous metal, a second member made of steel, and a welding method will be described in detail below.

### (Metal Type of Metal Powder)

In order to join the coating and the steel sheet by arc welding, as a material of the coating, it is important to select a metal material that can be welded to the steel sheet with the desired joint strength and that has good characteristics of the welding metal obtained by welding.

In the above-described embodiment, the example in which the coating is formed using the metal powder made of pure iron has been described, but the type of the metal powder is not limited to pure iron, and for example, stainless steel (SUS) capable of welding a good joining joint with the steel sheet easily can be selected.

In particular, among various stainless steels, ferritic stainless steel, austeniteic stainless steel, and ferritic and austenitic two-phase stainless steel are excellent in corrosion resistance as compared with martensitic stainless steel, and are therefore suitable as materials of automobiles exposed to corrosive environments. Therefore, as the metal powder used for the cold spray, a powder made of at least one metal selected from ferritic stainless steel, austenitic stainless steel, and ferritic and austenitic two-phase stainless steel can be used.

On the other hand, for example, when a stainless steel in which a large amount of a quenching element such as Cr or Ni is added is used as the metal powder, when the steel sheet is a high-tensile steel sheet or a hot stamp material, all or a part of the welding metal subjected to dilution of the base material undergoes martensitic transformation, the hardness becomes too high, and there is a concern that the joint strength may decrease or a crack may occur. In such a case, a powder containing at least one metal selected from pure iron, carbon steel, nickel, a nickel alloy, cobalt, and a cobalt alloy can be used as the metal powder used for the cold spray.

In the present specification, pure iron is easily available for industrial use and has a purity of 99.9 mass% or more. The carbon steel is mainly composed of iron and carbon, and represents a steel material containing trace amounts of silicon, manganese, impurity phosphorus, sulfur, copper, and the like. As the nickel alloy, an alloy containing Ni as a main component and an appropriate amount of Mo, Fe, Co, Cr, Mn, or the like that is commonly called an Inconel alloy, an Incoloy alloy, or a Hastelloy alloy can be used.

### (Particle Diameter and Shape of Metal Powder)

The particle diameter of the metal powder that is the material of the coating is not particularly limited, but when the gas pressure of the cold spray is a low pressure condition of 1 MPa or less, the particle diameter is, for example, preferably 20 µm or less, and more preferably 10 µm or less.

On the other hand, when the gas pressure is a high pressure condition of 1 MPa to 5 MPa, for example, the gas pressure is preferably 50 µm or less, and more preferably 30 µm or less.

The particle shape of the metal powder is not particularly limited, but is preferably spherical from the viewpoint of fluidity.

### (Type of Working Gas)

The gas used in the cold spray is not particularly limited, but is generally performed using air, nitrogen, helium, or a mixed gas thereof. On the other hand, when the coating is oxidized, the weldability may be adversely affected, and therefore nitrogen or helium is preferably used as the gas species.

### (Temperature of Working Gas)

As described above, in the case where aluminum or an aluminum alloy material is used as the base material of the coating, when the temperature of the gas used in the cold spray is high, there is a concern that the metal powder is melted to cause a chemical reaction with aluminum or an aluminum alloy material to generate an intermetallic compound. Therefore, the temperature of the working gas is preferably set to a temperature lower than the melting point of the metal powder used for the cold spray. In order to obtain the dissimilar metal joint product according to the present embodiment, it is preferable to set the temperature to room temperature (20°C) to 500°C, for example.

### (Thickness of Coating)

When the thickness of the coating formed by the cold spray is less than 0.5 mm, even when a welding condition for melting only the coating and the steel sheet is appropriately selected, it may be difficult to melt only the coating 2 and the steel sheet 3 due to the influence of the variation of the target position of the arc, and therefore robustness deteriorates.

Therefore, by setting the thickness of the coating 2 to 0.5 mm or more, it is possible to flexibly cope with the variation of the target position of the arc, and thus strict condition setting is not required. Therefore, the thickness of the coating 2 is preferably 0.5 mm or more, and more preferably 0.9 mm or more.

On the other hand, when the coating thickness of the coating 2 exceeds 3 mm, the coating formation time becomes long, which may result in an increase in manufacturing cost. Therefore, the thickness of the coating 2 is preferably 3 mm or less, and more preferably 2 mm or less.

### (First Member Made of Non-Ferrous Metal)

In the above embodiments, the aluminum alloy material is used as the first member, but the present invention is not particularly limited as long as the first member is a member made of non-ferrous metal, and for example, magnesium or a magnesium alloy material, copper, a copper alloy material, or the like can be used. For example, when the present invention is applied to a member used in automobiles or the like, from the viewpoint of strength, it is preferable to use an aluminum alloy material such as 2000 series, 5000 series, 6000 series and 7000 series. As shown in the fourth and fifth embodiments, in the present invention, not only a plate material, but also an extruded material, a cast material, or a forged material, which is often used in the field of automobiles and the like, can be used without any problem.

### (Second Member Made of Steel)

The second member made of steel is not particularly limited as long as the second member is a member made of metal generally called steel. However, in recent years, as a steel sheet used for a body frame or the like of an automobile, a high-tensile steel material (high-tensile material) or the like has been often used for the purpose of reducing the weight of the vehicle body and enhancing the collision safety. Mechanical joining methods popular as dissimilar metal joining methods between steel and aluminum cannot be easily applied to a steel sheet having a tensile strength of 980 MPa or more. Therefore, the present invention is particularly effective in a high tensile steel sheet having a tensile strength of 980 MPa or more.

### (Welding Method)

In the above embodiments, the coating and the steel material are joined by arc welding, but in the present invention, the welding method is not limited to arc welding, and laser welding or the like may be used. As the arc welding, MAG welding or MIG welding using a welding material, TIG welding, plasma welding, or the like may be appropriately used. In the TIG welding and the plasma welding, there are a welding method using a welding material and a welding method without using the welding material, but in the present embodiment, any welding method can be applied.

When the welding material is used in TIG welding, plasma arc welding, and laser welding, the gap can be filled with the welding material even when a gap is inevitably generated between the first member and the second member. Therefore, in the first to fifth embodiments described above, the first member and the second member are disposed such that the coating and the second member are adjacent to each other (that is, these members are in contact with each other), in the present embodiment, it is not always necessary to dispose the first member and the second member so as to be adjacent to each other. That is, the coating and the second member may be close to or contact with each other (that is, a state in which these members are in contact with each other or a state in which these members are slightly separated from each other), and may have a gap as long as the gap can be filled with the welding material.

In addition, since the arc welding is the most widely used metal welding joining method, a new facility or the like is not necessary when arc welding is used, and an increase in manufacturing cost can be suppressed.

Further, when laser welding is used, it is preferable to select an appropriate welding condition so as to suppress thermal influence on a first member made of non-ferrous metal such as aluminum or an aluminum alloy material to a minimum and melt only the coating and the steel material (second member). As a result, melting of aluminum or an aluminum alloy material can be suppressed, so that a reduction in joint strength can be prevented and a good dissimilar metal joint product can be obtained. As the laser welding condition, the heat source, the output, the welding speed, the diameter of the weld, the interval between the coating and the steel material, and the like can be appropriately selected.

As a welding material used for arc welding and laser welding, a steel alloy or a nickel alloy is applied. Examples of the welding material of the steel alloy include JIS Z3312 and AWS E7.18.

Although various embodiments have been described above with reference to the drawings, it is needless to say that the present invention is not limited to these examples. It will be apparent to those skilled in the art that various changes and modifications may be conceived within the scope of the claims, it is also understood that the various changes and modifications belong to the technical scope of the present invention. Components in the embodiments described above may be combined freely within a range not departing from the spirit of the present invention.

It should be noted that the present application is based on a Japanese Patent Application (Japanese Patent Application No. 2019-133128) filed on July 18, 2019, and the contents thereof are incorporated herein by reference.

### REFERENCE SIGNS LIST

1, 11, 21 Aluminum alloy sheet
1a, 11a, 21a, 31a, 41a End surface
1b, 3a, 13a, 23a Upper surface
2, 12, 22, 32, 42 Coating
3, 13, 23 Steel sheet
4, 14, 24a, 24b, 34, 44 Steel welding metal
11b, 21b One surface
21c The other surface (second surface)
31, 33 Square pipe
31b, 41b First surface
41, 43 H-type member

## Claims

1. A method for manufacturing a dissimilar metal joint product comprising joining a first member made of non-ferrous metal and having an end surface and a first surface adjacent to the end surface and a second member made of steel, the method comprising:
spraying a metal powder capable of being joined to the second member to the end surface and the first surface of the first member at a low temperature and at a high speed to form a coating to extend over the end surface and the first surface;
disposing the first member and the second member such that the coating and the second member are close to or contact with each other; and
performing fillet welding between the coating and the second member.

2. The method for manufacturing a dissimilar metal joint product according to claim 1, wherein the fillet welding melts only the coating and the second member.

3. The method for manufacturing a dissimilar metal joint product according to claim 1 or 2, wherein the fillet welding is an MAG welding or an MIG welding using a welding material, a TIG welding, a plasma welding, or a laser welding.

4. The method for manufacturing a dissimilar metal joint product according to claim 1 or 2, wherein the fillet welding is any of a lap fillet welding, a T-shaped fillet welding, and a circumference fillet welding.

5. The method for manufacturing a dissimilar metal joint product according to claim 4, wherein in the lap fillet welding, the first member in a plate shape is used as an upper plate and the second member is used as a lower member,
the coating is formed to extend from the end surface of the upper plate to an upper surface serving as the first surface of the upper plate, and
the coating and the lower member are welded to each other.

6. The method for manufacturing a dissimilar metal joint product according to claim 4, wherein in the T-shaped fillet welding, the first member in a plate shape is used as a riser and the second member is used as a lower member, and
the T-shaped fillet welding is a one-side fillet welding in which the coating is formed to extend over the first surface adjacent to the end surface from the end surface of the riser, the end surface facing an upper surface of the lower member, and the coating and the lower member are welded to each other from a first surface side.

7. The method for manufacturing a dissimilar metal joint product according to claim 4, wherein in the T-shaped fillet welding, the first member in a plate shape is used as a riser and the second member is used as a lower member, and
the T-shaped fillet welding is a two-side fillet welding in which the coating is formed to extend over the first surface and a second surface which are adjacent to the end surface and are opposed to each other from the end surface of the riser, the end surface facing an upper surface of the lower member, and the coating and the lower member are welded to each other from each of a first surface side and a second surface side.

8. The method for manufacturing a dissimilar metal joint product according to claim 3, wherein the welding material is either a steel alloy or a nickel alloy.

9. The method for manufacturing a dissimilar metal joint product according to claim 1 or 2, wherein the metal powder contains at least one selected from ferritic stainless steel, austenitic stainless steel, ferritic and austenitic two-phase stainless steel, pure iron, carbon steel, nickel, a nickel alloy, cobalt, and a cobalt alloy.

10. The method for manufacturing a dissimilar metal joint product according to claim 1 or 2, wherein the coating has a thickness of 0.5 mm or more.

11. A dissimilar metal joint product, comprising:
a first member made of non-ferrous metal and having an end surface and a first surface adjacent to the end surface;
a coating that is formed on a region extending over the end surface and the first surface by spraying a metal powder capable of being joined to the second member at a low temperature and at a high speed to the end surface and the first surface of the first member;
a second member made of steel and disposed to be close to or contact with the coating; and
a fillet weld that is formed between the coating and the second member.
